Europäisches Patentamt

European Patent Office

Office européen des brevets

(19)

(11)    EP 0 665 083 B1

(12)    **EUROPEAN PATENT SPECIFICATION**

(45) Date of publication and mention
of the grant of the patent:
**26.07.2000 Bulletin 2000/30**

(51) Int. Cl.⁷: **B24B 1/04**, B28D 5/04,
B06B 3/00, B23Q 1/25,
B23Q 5/027

(21) Application number: **94115871.9**

(22) Date of filing: **07.10.1994**

(54) **Improvement relating to cutting**

Vorrichtung zur Erleichterung des Schneidens

Dispositif pour faciliter la coupe

(84) Designated Contracting States:
**AT BE CH DE FR LI**

(30) Priority: **07.10.1993 GB 9320679**

(43) Date of publication of application:
**02.08.1995 Bulletin 1995/31**

(73) Proprietor:
**RAWSON, Francis Frederick Hamilton
Queniborough, Leicestershire LE7 8FP (GB)**

(72) Inventor:
**RAWSON, Francis Frederick Hamilton
Queniborough, Leicestershire LE7 8FP (GB)**

(74) Representative:
**Lally, William et al
FORRESTER & BOEHMERT
Franz-Joseph-Strasse 38
80801 München (DE)**

(56) References cited:
**EP-A- 0 353 415          CH-A- 671 529
DE-A- 1 704 178          FR-A- 2 082 090
GB-A- 1 524 924          JP-A- 63 139 647
JP-A- 63 139 649**

Note:  Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

Description of the Invention

This invention is concerned with improvements relating to cutting, in particular to cutting by the use of a cutting edge vibrating at ultrasonic frequency.

There is known from CH-A-671529 an ultrasonic machining device having a body portion and a longitudinal axis about which it is rotationally symmetrical, and about which it rotates, and means to apply ultrasonic vibrations to one side of the body portion in an axial direction. The other side of the body portion is provided with a flared tool which in use engages a work piece for carrying out a machining operation thereon.

Vibration of the tool shown in CH-A-671529 is wholly in the axial direction, and, apart from rotational movement, no suggestion has been made to attempt to produce movement of the tool in any other direction.

According to this invention there is provided a cutting device comprising an ultrasonic horn having a body portion and a longitudinal axis about which it is rotationally substantially symmetrical and about which it rotates, means to apply ultrasonic vibrations in an axial direction to a radial face of the body portion, the other side of the body portion being flared and terminating at a circumferential flange, characterised in that the distance between the radial face and the circumferential flange is $\frac{n\lambda}{2}$, where n is an integer, and $\lambda$ is the wavelength of the ultrasonic vibrations, whereby the vibrations applied axially to the body portion emanate as radial vibrations causing a cutting edge provided by or carried by said flange to vibrate in a plane at right angles to said axis.

The cutting device may be adapted for rotation about the longitudinal axis. For example, the cutting device may be provided with a formation to enable it to be secured to the mandrel of a drill, such as is disclosed in the specification of my UK patent, GB 2 203 367B. In this manner, a combination of rotary movement of the cutting edge, and radial inward and outward vibration thereof at ultrasonic speed, together with any residual axial vibrations, provides a highly effective cutting instrument.

If desired, the cutting edge may be toothed, e.g. in the manner of a circular saw blade.

Alternatively the cutting edge may be a grinding edge.

A cutting blade may be attached to said circumferential flange, preferably being bolted thereto at spaced locations around the periphery of the flange.

Preferably the cutting blade comprises a central hole lying on said axis, the relationship between the radius r1 of the hole and the radius r2 of the cutting blade being governed by the relationship

$$\frac{r1 + r2}{2} = k\lambda$$

Preferably the radius of the cutting blade is $\frac{n\lambda}{4}$, where n is an odd number, and is preferably 3 or more.

Preferably the cutting device comprises a plurality of circular cutting blades secured together in spaced but stacked array, providing spaced cutting edges.

Alternatively the cutting device may comprise a cylindrical cutting member axially aligned with the longitudinal axis of the ultrasonic horn, and so attached to the flared portion that the outer circumference of the cutting member vibrates at ultrasonic frequency in a pulsating manner. In this manner, a pattern cutter may be applied to the outer circumferential surface of the cutting member, enabling lines, shapes, slits, perforations or the like to be applied to the material being cut.

Preferably the device comprises a second ultrasonic horn having a body portion, and means to apply ultrasonic vibrations to one side of the body portion in an axial direction, the other side of the body portion being flared and terminating at a circumferential flange, the vibrations applied axially to the body portion emanating as radial vibrations lying in a plane extending at right angles to said axis, said second horn being arranged axially in line with and opposite to the first horn, being driven in synchronism therewith, said cutting blades being clamped between the two horns.

There will now be given a detailed description, to be read with reference to the accompanying drawings, of a cutting device which is a preferred embodiment of this invention, having been selected for the purpose of illustrating the invention by way of example.

In the accompanying drawings:-

Figure 1 is a longitudinal sectional view of the preferred embodiment;
Figure 2 is a sectional view taken on the line II-II of Figure 1;
Figure 3 is a view similar to Figure 1 showing a modified construction of the preferred embodiment;
Figure 4 is a view showing the use of an alternative cutting member;
Figure 4A shows a further alternative cutting member;
Figure 5 shows a typical cutting pattern which may be utilised in the embodiment shown in Figure 4;
Figure 6 shows an alternative construction of spacer member for use in the preferred embodiments; and
Figure 7 shows a second embodiment of the invention.

The cutting device which is the preferred embodiment of this invention comprises an ultrasonic horn 6 comprising a cylindrical body portion 8 having a face 10 to which longitudinal ultrasonic vibrations are applied by a piezo-electric transducer 12 through a booster 14. On the side opposite to the face 10 the body 8 is outwardly flared into a bell-shaped section 16, terminating in a circumferential flange 18. In this arrangement, where the distance X-Y (shown in dotted lines) is equal to $\frac{n\lambda}{2}$, $\lambda$ being the wavelength of the vibrations applied to the end face 10, the axial vibrations emanate as radial vibrations at the circumferential face 19 of the flange 18.

On the opposite side of the piezo-electric transducer 12, a securing member 22 is provided, to enable the cutting device to be attached to a rotary mandrel or spindle, slip rings being provided to enable electrical connection to be established, to enable the cutting device to be rotated about the longitudinal axis L/A and conveniently a arrangement is used as is described in the specification of my afore-mentioned patent.

In its simplest form, the circumferential face 19 of the flange 18 is provided as a cutting edge, which in the operation of the device undergoes a "pulsating" motion, vibrating alternately radially outwardly in an expansion mode and radially inwardly in a contraction mode. This coupled with rotation of the device about the longitudinal axis produces a convenient cutting operation. Whilst theoretically all of the longitudinal axis vibrations produced by the devices 12 and 14 are converted to vibrations of the flange 18 in the plane B-B at right angles to the longitudinal axis, there is a small residual vector of longitudinal movement of the flanges 18, dependant upon the flare of the bell-shaped section and the radius of the circumferential flange, such residual longitudinal movement adding to the efficacy of the cutting motion. Indeed, if desired by appropriate tuning (i.e. removal of metal from the horn 8) the extent of such longitudinal motion of the flange 18 may be increased or reduced. Additionally the vibrational amplitude may be controlled by the booster and transducer, as with a conventional ultrasonic horn assembly.

Preferably however attached to the flange 18 is a circular cutting member in the form of a circular saw blade, provided on its periphery with toothed formation 26, and secured to the flange 19 by bolts 28 extending around the periphery of the flange 18 at spaced positions. The bolt 28 extends through a plurality of similar cutting blades, designated 24b to 24d, adjacent cutting blades being retained in spaced relationship by tubular spacer elements 30.

At the opposite end a similar arrangement of transducer 12a, booster 14a and ultrasonic horn 8a is provided, being secured by nuts 29 to the opposite ends of the bolts 28, a circumferential bearing 34 being provided to retain rotation of the assembly about the longitudinal axis L/A. Conveniently the transducers 12, 12a are driven in synchronism, so that pulsation movement of all of the blades is assisted by radial vibration of both flanges.

The cutting blade 24 is provided with a central hole, the radius r1 of which, in relation to the radius r2 of the outer circumference of the disc, is determined by the relationship

$$\frac{r1 + r2}{2} = k\lambda.$$

In this manner a radial or "breathing" resonant mode is produced, with maximum radial movement of the toothed formation 26 of the cutting blade.

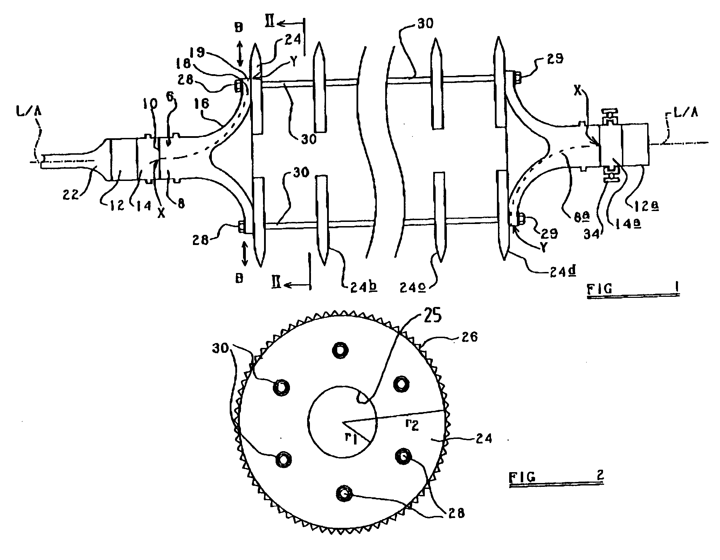

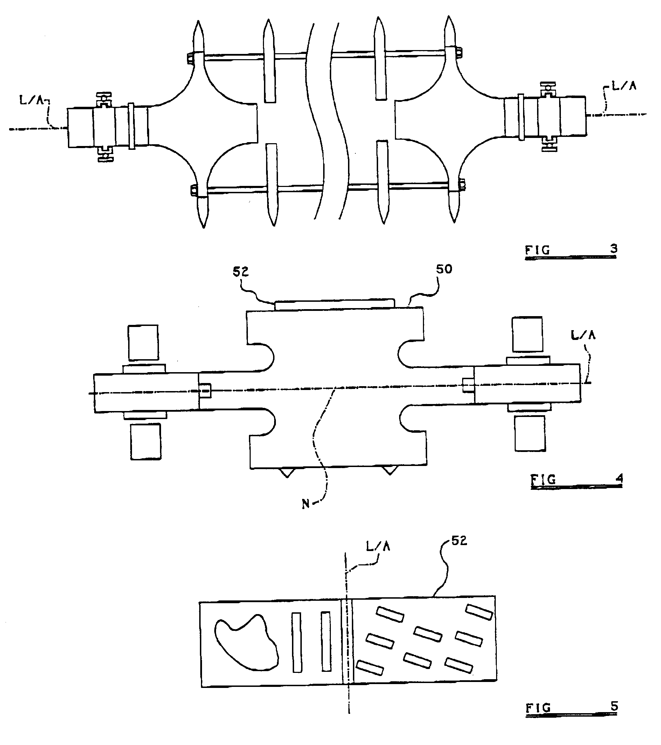

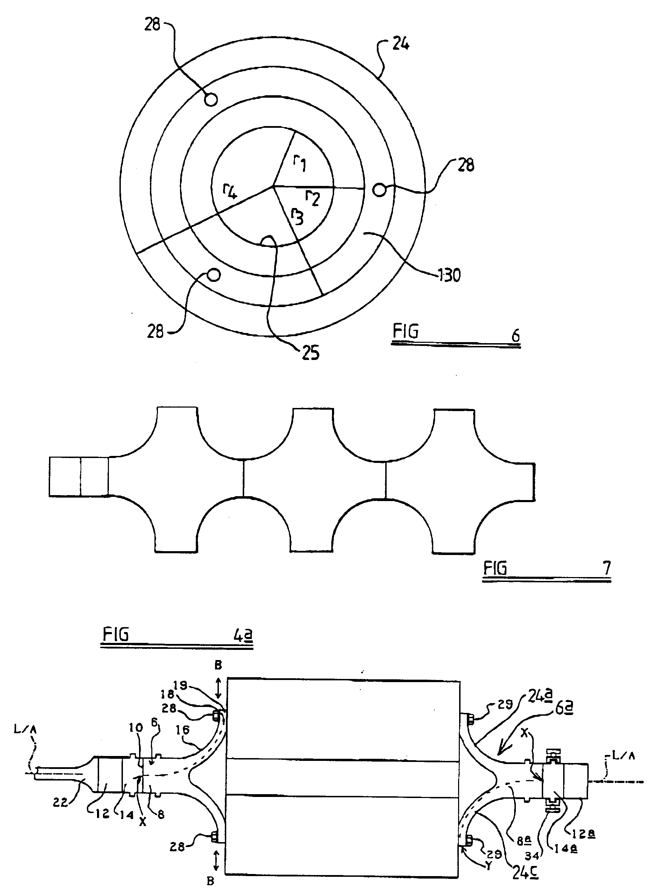

Whilst in the preferred embodiment of the invention the horn is shown as being of bell-shape in cross-section, the horn may be of solid cross-section, as is shown in Figure 3. In such a construction, conveniently a cutting blade is fixed to the periphery of the circumferential flange as is shown, and such a construction may of course be utilised in a cutting machine comprising an array of cutting blades, as is shown.

Alternative to the use of cutting blades per se, if desired a cutting member 50 may be utilised, having a circumferential surface extending coaxially with the longitudinal axis of the ultrasonic device, so arranged that the centre of the cutting member N is located at a node, whilst the circumferential surface of the cutting member is at a radial antinode, and vibrates similarly in a pulsating manner. In such a construction a pattern cutter 52 may be utilised, to apply to the article being cut either a shaped cutting pattern, slits, apertures, longitudinal or transverse lines, or the like, again in conventional manner, but, as part of the preferred embodiment, with a considerable improvement in cutting capability.

If desired, the cutting member may itself be in the form of a radial horn, as is shown in Figure 4A, being in the form of a hollow cylinder having an internal radius r1 and an external radius r2, where $\frac{r1 + r2}{2}$ equals k$\lambda$.

Figure 6 shows an alternative arrangement of spacer member 130, which is in the form of a tubular member having an internal radius r2 and an external radius r3, a plurality of bores 28 being provided, for the accommodation of the bolts 29 (refer to Figure 1). In this construction, preferably the cutting blades 24 have an internal (bore) radius r1, and an outside radius r4, the relationship of the dimensions being such that $\frac{r1 + r4}{2}$ equals $\frac{r2 + r3}{2}$ which equals k$\lambda$.

Figure 7 illustrates schematically a second embodiment of the invention, which utilises a plurality of cutting members each being of such a shape that when axial vibrations are applied thereto (along the longitudinal axis L/A) this is transferred to radial vibrations seen at the circumference of the flanges thereof, generally technically in the same manner as hereinbefore described. By utilising cutting members of the kind illustrated in Figure 6, any desired number may be bolted together, and may be secured at opposite ends of the linear array thereof to ultrasonic vibrating devices. Cutting may be effected either by shaping of the circumferential flanges of the cutting members, or by the securing thereto of annular cutting blades. Alternatively, the circumferential flanges of the cutting devices may similarly be provided with pattern cutters, generally of the kind illustrated in Figure 4.

**Claims**

1. A cutting device comprising an ultrasonic horn (6) having a body portion (8) and a longitudinal axis (L/A) about which it is rotationally substantially symmetrical and about which it rotates, means (12) and (14) to apply ultrasonic vibrations in an axial direction to a radial face (10) of the body portion, the other side of the body portion (8) being flared and terminating at a circumferential flange (18), characterised in that the distance (X-Y) between the radial face (10) and the circumferential flange (18) is $n\lambda/2$, where n is an integer, and $\lambda$ is the wavelength of the ultrasonic vibrations, whereby the vibrations applied axially to the body portion emanate as radial vibrations causing a cutting edge (26) provided by or carried by said flange (18) to vibrate in a plane at right angles to said axis (L/A).

2. A cutting device according to Claim 1 comprising means to rotate the device about the longitudinal axis (L/A).

3. A cutting device according to one of Claims 1 and 2 where the cutting edge is toothed.

4. A cutting device according to one of Claims 1 and 2 wherein the cutting edge is afforded by a grinding edge.

5. A cutting device according to any one of the preceding claims comprising a cutting blade (24) attached to said circumferential flange (18) at spaced intervals.

6. A cutting device according to Claim 5 wherein the cutting blade (24) comprises a central hole (25), said hole lying on said axis, the relationship between the radius r1 of the hole (25) and the radius r2 of the cutting blade (24) preferably being governed by the relationship

$$\frac{r1 + r2}{2} = k\lambda.$$

7. A cutting device according to any one of the preceding claims comprising a plurality of circular cutting blades (24a, 24b, 24c, 24d) secured together in spaced but stacked array, each cutting blade providing a cutting edge.

8. A cutting device according to any one of Claims 1 to 6 comprising a cylindrical cutting member (52) aligned with the longitudinal axis L/A of the horn (8), and so attached to the flared portion (16) that the outer circumference of the cutting member vibrates at ultrasonic frequency in a pulsating manner.

9. A cutting device according to any one of the preceding claims comprising a second ultrasonic horn (6a) having a body portion (8a), and means (12a, 14a) to apply ultrasonic vibrations to one side of the body portion (8a) in an axial direction, the other side of the body portion being flared and terminating in a circumferential flange (18a), the vibrations applied axially to the body portion (8a) emanating as radial vibrations lying in a plane extending at right angles to said axis, said second horn (6a) being arranged axially in line with and opposite to the first horn (6) and being driven in synchronism therewith, cutting blades (24a, 24b, 24c, 24d) being clamped between the two horns.

**Patentansprüche**

1. Schneidvorrichtung, die einen Ultraschalltrichter (6) mit einem Grundkörperabschnitt (8) und einer länglichen Achse (L/A), um die sie im wesentlichen rotationssymmetrisch ist und um die sie rotiert, aufweist mit Mitteln (12) und (14), um Ultraschallschwingungen in einer axialen Richtung auf eine radiale Stirnfläche (10) aufzubringen, wobei die andere Seite des Grundkörperabschnitts (8) aufgeweitet ist und an einem Ringflansch (18) endet, dadurch gekennzeichnet, daß der Abstand (X-Y) zwischen der radialen Stirnfläche (10) und dem Ringflansch (18) $n\lambda/2$ beträgt, wobei n eine Ganzzahl und $\lambda$ die Wellenlänge der Ultraschallschwingungen ist, wobei die axial auf den Grundkörperabschnitt aufgebrachten Schwingungen als radiale Schwingungen ausgesandt werden, um zu veranlassen, daß eine Schneidkante (26), gebildet oder getragen durch den Ringflansch (18), in einer Ebene rechtwinklig zu der Achse (L/A) schwingt.

2. Schneidvorrichtung nach Anspruch 1, dadurch gekennzeichnet, daß das Werkzeug Mittel aufweist, um die Vorrichtung um eine Längsachse (L/A) zu rotieren.

3. Schneidvorrichtung nach Anspruch 1 oder 2, dadurch gekennzeichnet, daß die Schneidkante gezahnt ist.

4. Schneidvorrichtung nach Anspruch 1 und 2, dadurch gekennzeichnet, daß die Schneidkante durch eine Schleifkante gebildet ist.

**5.** Schneidvorrichtung nach einem der vorangehenden Ansprüche, dadurch gekennzeichnet, daß ein Schneidblatt (24) an dem Ringflansch (18) in gegenseitigen Abständen angeordnet ist.

**6.** Schneidvorrichtung nach Anspruch 5, dadurch gekennzeichnet, daß das Schneidblatt (24) eine zentrale Öffnung (25) aufweist, wobei die Öffnung auf der Achse liegt und die Beziehung zwischen dem Radius r1 der Öffnung (25) und dem Radius r2 des Schneidblattes (24) vorzugsweise durch die Beziehung

$$\frac{r1 + r2}{2} = k\lambda$$

festgelegt ist.

**7.** Schneidvorrichtung nach einem der vorangehenden Ansprüche, dadurch gekennzeichnet, daß eine Vielzahl von kreisrunden Scheidblättern (24a, 24b, 24c, 24d) beabstandet, aber gestapelt aneinander befestigt sind, wobei jedes Schneidblatt eine Schneidkante bereitstellt.

**8.** Schneidvorrichtung nach einem der Ansprüche 1 bis 6, gekennzeichnet durch ein zylindrisches Schneidelement (52), ausgerichtet mit der Längsachse L/A des Trichters (8), das so an den aufgeweiteten Teil (16) angefügt ist, daß der äußere Umfang des Schneidblattes mit Ultraschallfrequenz pulsierend schwingt.

**9.** Schneidvorrichtung nach einem der vorangehenden Ansprüche, mit einem zweiten Ultraschalltrichter (6a), der einen Grundkörperabschnitt (8a) aufweist, und Mitteln (12a, 14a), um Ultraschallschwingungen in einer Längsrichtung auf eine Seite des Körperteils (8a) aufzubringen, wobei die andere Seite des Grundkörperabschnitts aufgeweitet ist und an einem Ringflansch (18a) endet, wobei die aufgebrachten Schwingungen axial auf den Grundkörperabschnitt (8a) als radiale Schwingungen ausgesandt werden, die in einer sich rechtwinklig zu der Achse erstreckenden Ebene liegen, wobei der zweite Trichter (6a) axial längs einer Linie und gegenüberliegend dem ersten Trichter (6) angeordnet ist und synchron damit betrieben ist, wobei Schneidblätter (24a, 24b, 24c, 24d) zwischen den beiden Trichtern eingespannt sind.

**Revendications**

**1.** Un dispositif de coupe comprenant un cornet (6) à ultrasons comportant une partie de corps (8) et un axe longitudinal (L/A) par rapport auquel il est sensiblement symétrique en rotation et autour duquel il tourne, des moyens (12) et (14) pour appliquer des vibrations ultrasonores en direction axiale à une face radiale (10) de la partie de corps, l'autre côté de la partie de corps (8) étant évasé et se terminant par un rebord circonférentiel (18), caractérisé en ce que la distance (X-Y) entre la face radiale (10) et le rebord circonférentiel (18) est nλ/2, où n est un entier et λ est la longueur d'onde des vibrations ultrasonores, de sorte que les vibrations appliquées axialement à la partie de corps en sortent comme des vibrations radiales amenant un bord de coupe (26) formé ou porté par ledit rebord circonférentiel (18) à vibrer dans un plan perpendiculaire audit axe (L/A).

**2.** Un dispositif de coupe selon la revendication 1, comprenant des moyens pour faire tourner le dispositif autour de l'axe longitudinal (L/A).

**3.** Un dispositif de coupe selon l'une des revendications 1 et 2 dans lequel le bord de coupe est denté.

**4.** Un dispositif de coupe selon l'une des revendications 1 et 2, dans lequel le bord de coupe est formé par un bord de meulage.

**5.** Un dispositif de coupe selon l'une quelconque des revendications précédentes, comprenant une lame de coupe (24) fixée audit rebord circonférentiel (18) en des zones espacées.

**6.** Un dispositif de coupe selon la revendication 5, dans lequel la lame de coupe (24) comprend un trou central (25), ledit trou se trouvant sur ledit axe, la relation entre le rayon r1 du trou (25) et le rayon r2 de la lame de coupe (24) étant de préférence soumise à la loi

$$\frac{r1+r2}{2} = k\lambda.$$

**7.** Un dispositif de coupe selon l'une quelconque des revendications précédentes, comprenant une pluralité de lames de coupe circulaires (24a, 24b, 24c, 24d) fixées ensemble en formation empilées mais espacées, chaque lame de coupe comprenant un bord de coupe.

**8.** Un dispositif de coupe selon l'une quelconque des revendications 1 à 6, comprenant un organe de coupe cylindrique (52) aligné avec l'axe longitudinal L/A du cornet (8), et fixé à la partie évasée (16) de sorte que la circonférence extérieure de l'organe de coupe vibre à une fréquence ultrasonore de façon pulsatoire.

**9.** Un dispositif de coupe selon l'une quelconque des

**EP 0 665 083 B1**

revendications précédentes, comprenant un second cornet (6a) à ultrasons comportant une partie de corps (8a), et des moyens (12a, 14a) pour appliquer des vibrations ultrasonores à un côté de la partie de corps (8a) en direction axiale, l'autre côté de la partie de corps étant évasé et se terminant en un rebord circonférentiel (18a), les vibrations appliquées axialement à la partie de corps (8a) en sortant comme des vibrations radiales dans un plan s étendant à angle droit par rapport audit axe, ledit second cornet (6a) étant agencé axialement en ligne avec le premier cornet (6) et opposé à celui-ci et étant piloté en synchronisme avec lui, des lame de coupe (24a, 24b, 24c, 24d) étant montées entre les deux cornets.

FIG 1

FIG 2

FIG 3

FIG 4

FIG 5

FIG 6

FIG 7

FIG 4a